# EUROPÄISCHE PATENTANMELDUNG

(11) **EP 4 632 337 A1**
(43) Veröffentlichungstag der Anmeldung: **15.10.2025**
(21) Anmeldenummer: 24169220.1
(22) Anmeldetag: 09.04.2024
(51) Int. Cl.: G01H 1/00, G10K 9/128

(54) **ULTRASCHALLWANDLER ZUM AUSSENDEN UND/ODER ZUM EMPFANGEN VON ULTRASCHALLSIGNALEN**

(71) Anmelder: FLEXIM Flexible Industriemesstechnik GmbH, 12681 Berlin (DE)
(72) Erfinder: Liu, Yi, Bolton, MA 01740 (US); Funck, Bernhard, 18059 Rostock (DE); Hilpert, Jens, 16356 Werneuchen (DE)
(74) Vertreter: Grünbaum, Annekathrin

(57) **Zusammenfassung**

Die Erfindung einen Ultraschallwandler zum Aussenden und/oder zum Empfangen von Ultraschallsignalen.

Es ist daher Aufgabe der Erfindung die Nachteile des Standes der Technik zu beseitigen und einen neuartigen Ultraschallwandler bereitzustellen.

Die Lösung dieser Aufgabe erfolgt durch die in den Ansprüchen aufgeführten Merkmale.

## Beschreibung

Die Erfindung einen Ultraschallwandler zum Aussenden und/oder zum Empfangen von Ultraschallsignalen.

Die vorliegende Erfindung bezieht sich auf die Ultraschall-Durchflussmessung. Die Ultraschall-Durchflussmessung wird in allen Industriezweigen zur Messung des Durchflusses von Flüssigkeiten und Gasen eingesetzt. Zu den Anwendungen gehören die Messung von Fackelgas und Rauchgas. Die Ultraschallwandler werden in ein Rohr eingeführt, durch das das Fackelgas strömt.

Schallwandler für die Ultraschall-Durchflussmessung sind so konzipiert, dass sie Ultraschallsignale senden und empfangen. Sie enthalten in der Regel ein Piezoelement. Diese Elemente wandeln die elektrische Anregung in ein Ultraschallsendesignal um, wenn sie als Sender arbeiten. Wenn sie als Empfänger arbeiten, wandeln sie das empfangene Ultraschallsignal in ein elektrisches Signal um, aus dem der Durchflussmesser den Durchfluss ermittelt. Bei der Fackelgasmessung werden zwei identische, einander gegenüberliegende Messwertgeber in das Rohr eingeführt. Zwischen ihnen wird ein Signal in beide Richtungen gesendet.

Der Fackelgasstrom kann sehr hohe Geschwindigkeiten von über 100m/s erreichen. Dies verursacht eine starke Verschiebung des Ultraschallsignals in Richtung der Rohrachse. Die Verschiebung kann so groß sein, dass das Signal den Empfangswandler verfehlt. Dieser Effekt ist als "Strahlverwehungseffekt" bekannt. Er kann durch die Verwendung von Schallköpfen mit einer breiten Richtcharakteristik vermieden werden. Die Richtcharakteristik hängt von der Größe der abstrahlenden Fläche des Schallwandlers ab, insbesondere vom Verhältnis dieser Größe zur Wellenlänge. Die Wellenlänge ist das Verhältnis der Schallgeschwindigkeit zur Ultraschallfrequenz. Die Abmessungen von Piezoelementen sind ungefähr proportional zur Wellenlänge. Dies lässt keine sehr kleinen Abmessungen im Vergleich zur Wellenlänge zu. Eine Lösung des Problems besteht darin, die Wandler weit in das Rohr hineinragen zu lassen, so dass der Abstand zwischen den beiden Wandlern klein genug wird, um den Strahlverwehungseffekt in ausreichendem Maße zu verringern. Dies geht jedoch zu Lasten der Genauigkeit. Daher wird ein Messwertaufnehmer benötigt, der eine kleinere Abstrahlfläche aufweist.

Fackelgase und Rauchgas werden bei niedrigem Druck nahe dem Umgebungsdruck gemessen. Der niedrige Druck und die typischen Gaszusammensetzungen können eine starke Dämpfung des Ultraschallsignals verursachen. Außerdem können die Rohre sehr groß sein, was ebenfalls den Signalverlust erhöht. Dies erfordert einen Schallwandler mit hohem Wirkungsgrad.

Eine weitere Anforderung an einen Messwertaufnehmer für die Ultraschall-Durchflussmessung besteht darin, dass das Signal auch bei Vorhandensein von Rauschen deutlich zu erkennen ist. Dazu muss das Signal ausreichend kurz sein. Ein hoher Wirkungsgrad und eine kurze Signalform sind bei der Verwendung von piezoelektrischen Elementen zum Teil widersprüchlich. Ziel der Erfindung ist es daher, einen Wandler zur Verfügung zu stellen, der einen hohen Wirkungsgrad aufweist und gleichzeitig ein kurzes und deutlich detektierbares Signal erzeugt.

Ein Teil der Ultraschallsignale wandert immer auf Pfaden außerhalb der Flüssigkeit innerhalb der Rohrwand zu den empfangenden Wandlern. Dieser Signalanteil, auch struktureller Störschall genannt, verursacht eine Störung des für die Durchflussmessung verwendeten Signals. Je niedriger die Frequenz des Signals ist, desto schwieriger ist es, den strukturellen Störschall zu vermeiden. In der Fachliteratur sind mehrere Mittel zur Reduzierung des strukturellen Störschalls bekannt.

### Darstellung der Erfindung

Es ist Aufgabe der Erfindung die Nachteile des Standes der Technik zu beseitigen und einen neuartigen Ultraschallwandler bereitzustellen. Aufgabe der vorliegenden Erfindung ist es ferner, eine Lösung für Ultraschallwandler mit einer kleinen Größe der Abstrahlfläche zur Erzielung einer breiten Abstrahlcharakteristik bereitzustellen, die den Strahlverwehungseffekt vermeidet. Eine weitere Aufgabe ist es, einen hohen Wirkungsgrad zu ermöglichen und gleichzeitig ein deutlich detektierbares Signal zu liefern und den strukturellen Störschall auf ein ausreichendes Maß zu reduzieren.

Die Lösung dieser Aufgabe erfolgt durch die in den Ansprüchen aufgeführten Merkmale.

Die Lösung der Aufgabe erfolgt durch einen Ultraschallwandler, welcher zum Aussenden und/oder zum Empfangen von Ultraschallsignalen ausgebildet ist. Der Ultraschallwandler weist folgende Komponenten auf: ein magnetostriktives Element, eine Spule, zumindest eine Schallabstrahlungsfläche, einen Wandlerkopf, einen Wandlerflansch und eine Rauschunterdrückungseinheit. Die Rauschunterdrückungseinheit ist im Wandlerkopf und/oder im Wandlerflansch angeordnet. Die Rauschunterdrückungseinheit weist zumindest zwei verschiedene Schichten mit verschiedenen Materialien auf. Die erste Schicht weist Aussparungen auf. Die zweite Schicht ist aus einer Vergussmasse gebildet, welche auf die Aussparungen der ersten Schicht aufgebracht ist. Das magnetostriktive Element ist derart angeordnet, dass ein Wechselfeld der Spule eine Längenänderung des magnetostriktiven Elementes erzeugt. Das magnetostriktive Element ist mit der zumindest einen Schallabstrahlungsfläche derart gekoppelt, dass die Längenänderung die zumindest eine Schallabstrahlungsfläche derart verformt, dass an der dem magnetostriktiven Element abgewandten Seite der Schallabstrahlungsfläche ein zu sendendes Ultraschallsignal erzeugt wird. Ferner ist das magnetostriktive Element derart mit der zumindest einen Schallabstrahlungsfläche gekoppelt, dass die Verformung der Schallabstrahlungsfläche, welche durch ein zu empfangendes Ultraschallsignal bewirkt wird, eine Längenänderung des magnetostriktiven Elementes bewirkt und wobei eine Längenänderung des magnetostriktiven Elementes eine Spannung in der Spule erzeugt, so dass aus einem eingehendem Ultraschallsignal wiederum ein elektrisches Signal erzeugt wird.

Das magnetostriktive Element in Kombination mit einer Spule ist ein Element zur Umwandlung eines elektrischen Anregungssignals in ein Ultraschallsignal und zur Umwandlung des empfangenen Ultraschallsignals in ein elektrisches Signal. Es ist gemäß verschiedener Ausführungsformen ein Stab, der aus einem Material mit gigantischer magnetostriktiver Wirkung, einem so genannten GMM (giant magnetostrictive material), hergestellt ist. Die chemische Zusammensetzung kann beispielsweise aus Terbium, Dysprosium und Eisen oder TbDyFe bestehen.

Gemäß verschiedener Ausführungsbeispiele weist der Ultraschallwandler ferner eine Einrichtung zur Erzeugung einer Vormagnetisierung des magnetostriktiven Element auf. Die Vormagnetisierung des magnetostriktiven Elementes bewirkt eine Linearisierung des Zusammenhangs zwischen elektrischer Anregung und Dehnung des magnetostriktiven Elementes. Bevorzugt weist die Einrichtung zur Erzeugung einer Vormagnetisierung des magnetostriktiven Elements zumindest einen Dauermagnet und/oder zumindest einen magnetischen Koppler auf.

Gemäß verschiedener Ausführungsformen ist die erste Schicht eine Gehäusewand des Ultraschallwandler bzw. des Wandlerkopfes und/oder des Wandlerflansches und/oder der Rauschunterdrückungseinheit.

Gemäß verschiedener Ausführungsformen weist/weisen der Wandlerflansch, der Wandlerkopf und/oder die Rauschunterdrückungseinheit jeweils zumindest ein Kopplungselement auf, wobei das zumindest eine Kopplungselement derart ausgestaltet ist, dass mittels der Kopplungselemente der Wandlerflansch und der Wandlerkopf miteinander koppelbar sind und/oder der Wandlerkopf mit der Rauschunterdrückungseinheit miteinander koppelbar sind und/oder der Wandlerkopf an einer Aufnahmevorrichtung an einem Messrohr.

Gemäß verschiedener Ausführungsformen weist das zumindest eine Kopplungselement ein starres Verbindungselement, beispielsweise eine Stange, und/oder ein elektrisches Verbindungselement zur Ankopplung des Wandlerkopfes an einen Sender und/oder ein mechanisches Verbindungselement zur Ankopplung an eine Aufnahmevorrichtung an einem Messrohr und/oder ein akustisches Verbindungselement auf.

Gemäß verschiedener Ausführungsformen weist das zumindest eine Kopplungselement ferner eine akustische Isolierung auf. Die akustische Isolierung kann beispielsweise mittels eines O-Rings und/oder einer Dichtung erfolgen.

Ferner weist der Ultraschallwandler gemäß verschiedener Ausführungsformen eine Vorspannungseinheit und/oder eine Dämpfungseinheit auf. Die Dämpfungseinheit kann einen O-Ring aufweisen.

Bevorzugt weist die Vergussmasse der Rauschunterdrückungseinheit Partikel auf, wobei die Partikel bevorzugt eine Größe in µm-Bereich aufweisen. Bevorzugt sind die Partikel Partikel mit einer hohen Dichte, beispielsweise Partikel mit einer Dichte größer als 8g/cm³. Mittels der Hinzugabe solcher Partikeln in eine bevorzugt aus Epoxidharz bestehende Vergussmasse, wird eine besonders hohe Dichte erreicht. Da Epoxidharz in der Regel eine niedrige Dichte (etwa 1 ,4g/cm3) aufweist, erfolgt mittels einer Hinzugabe der Partikel, insbesondere mittels der Hinzugabe der Partikel mit hoher Dichte, eine Anpassung der Dichte der Vergussmasse an die Dichte der metallischen (bevorzugt aus Edelstahl bestehenden) Gehäusewand. Die Impedanz der Vergussmasse wird dadurch auf die Impedanz der Gehäusewand angepasst.

Gemäß verschiedener Ausführungsformen ist das Vergussmaterial beim Aushärten geschleudert worden. Durch das Schleudern beim Härten gelangen die Partikel näher an die Gehäusewand, so dass vom Beginn der Vergussmasse (Gehäuseinnenwand/zweite Schicht) zur Gehäuseedelstahlwand die Impedanz zunimmt. Dadurch liegt nach dem Aushärten eine maximale Impedanz des Vergusses an der eigentlichen Gehäusewand der Rauschunterdrückungseinheit vor.

### Ausführung der Erfindung

Die vorliegende Erfindung wird anhand der nachstehenden detaillierten Beschreibung und der beigefügten Zeichnungen, die nur der Veranschaulichung dienen und somit die vorliegende Erfindung nicht einschränken, besser verständlich. Hierzu zeigen
- Figur 1: Wandlerkopf
- Figur 2: Messwandlerflansch
- Figur 3: Ausführungsformen einer Rauschunterdrückungseinheit
- Figur 4: Hochtemperaturversion

In der Beschreibung wird auf die beigefügten Zeichnungen Bezug genommen, in denen zur Veranschaulichung spezifische Ausführungsformen gezeigt sind, in denen die erfindungsgemäße Anordnung ausgeführt werden kann. In dieser Hinsicht wird eine Richtungsterminologie wie etwa "oben", "unten" usw. mit Bezug auf die Orientierung der beschriebenen Zeichnungen verwendet. Die Richtungsterminologie dient der Veranschaulichung und ist auf keinerlei Weise einschränkend.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

In den Figuren werden identische oder ähnliche Elemente mit identischen Bezugszeichen versehen, soweit dies zweckmäßig ist.

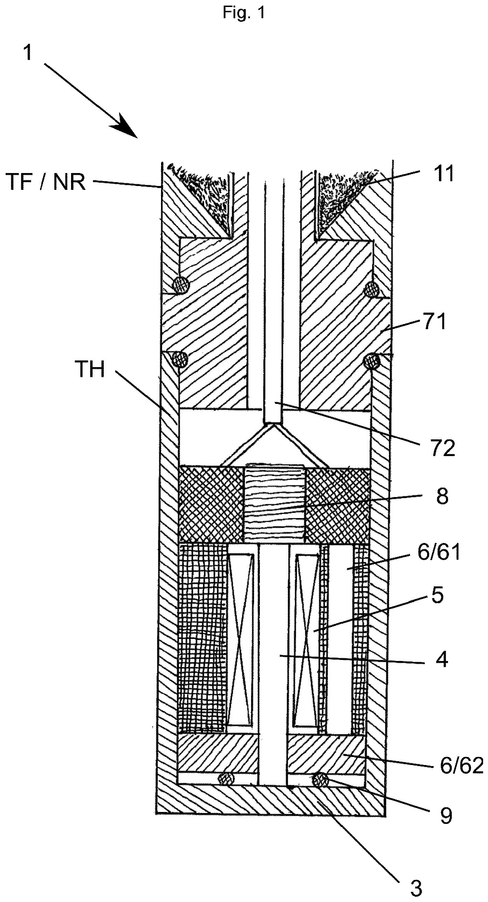

In Figur 1 ist ein erfindungsgemäßer Ultraschallwandler 1 zum Aussenden und/oder zum Empfangen von Ultraschallsignalen abgebildet, welcher folgende Komponenten aufweist: ein schallumwandelndes magnetostriktives Element 4, eine Spule 5, zumindest eine Schallabstrahlungsfläche 3, einen Wandlerkopf (TH), einen Wandlerflansch (TF) und eine Rauschunterdrückungseinheit (NR). Die Rauschunterdrückungseinheit (NR) ist im Wandlerkopf (TH) und/oder im Wandlerflansch (TF) angeordnet. Die Rauschunterdrückungseinheit (NR) weist zumindest zwei verschiedene Schichten (10/11) mit verschiedenen Materialien auf. Die erste Schicht (10) weist Aussparungen auf. Die zweite Schicht (11) ist aus einer Vergussmasse gebildet, welche auf die Aussparungen der ersten Schicht (10) aufgebracht ist. Das magnetostriktive Element 4 ist derart angeordnet ist, dass ein erzeugtes Wechselfeld der Spule 5 eine Längenänderung des magnetostriktiven Elementes 4 erzeugt, und wobei das magnetostriktive Element 4 mit der zumindest einen Schallabstrahlungsfläche 3 derart gekoppelt ist, dass die Längenänderung die zumindest eine Schallabstrahlungsfläche 3 derart verformt, dass an der dem magnetostriktiven Element 4 abgewandten Seite der zumindest einen Schallabstrahlungsfläche 3 ein zu sendendes Ultraschallsignal erzeugt wird. Ferner bewirkt anders herum die Verformung der zumindest einen Schallabstrahlungsfläche 3, welche durch ein zu empfangendes Ultraschallsignal bewirkt wird, eine Längenänderung des magnetostriktiven Elementes 4, wobei eine Längenänderung des magnetostriktiven Elementes 4 eine Spannung in der Spule 5 erzeugt, womit ein elektrisches Signal erzeugt wird.

Ferner weist der erfindungsgemäße Ultraschallwandler 1 gemäß verschiedener Ausführungsvarianten eine Einrichtung 6 zur Erzeugung einer Vormagnetisierung des magnetostriktiven Element 4 auf, wobei diese Einrichtung 6 zur Erzeugung einer Vormagnetisierung des magnetostriktiven Elements 4 bevorzugt zumindest einen Dauermagneten 61 und/oder zumindest einen magnetischen Koppler 62 aufweist.

Gemäß verschiedener Ausführungsformen ist/sind das magnetostriktive Element 3, die Spule 5, die zumindest eine Schallabstrahlungsfläche 3 und/oder die Einrichtung 6 zur Erzeugung einer Vormagnetisierung des magnetostriktiven Element 4 im Wandlerkopf TH des Ultraschallwandlers 1 angeordnet. Es ist jedoch auch denkbar, dass diese aufgezählten Komponenten oder ein Teil der aufgezählten Komponenten im Wandlerflansch TF angeordnet sind.

Gemäß verschiedener Ausführungsvarianten weisen der Wandlerflansch TF, der Wandlerkopf TH und/oder die Rauschunterdrückungseinheit NR jeweils zumindest ein Kopplungselement 7 auf, welches jeweils derart ausgestaltet sind, dass mittels des zumindest einen Kopplungselements 7 der Wandlerflansch TF und der Wandlerkopf TH miteinander koppelbar sind und/oder der Wandlerkopf TH mit der Rauschunterdrückungseinheit NR und/oder der Wandlerflansch TF mit dem Messrohr.

Bevorzugt weist das zumindest eine Kopplungselement 7 gemäß verschiedener Ausführungsvarianten ein starres Verbindungselement 71 und ein elektrisches Verbindungselement 72 zur Ankopplung des Wandlerkopfes TH an einen Ultraschallsender/-empfänger und/oder ein mechanisches Verbindungselement 73 zur Ankopplung an eine Aufnahmevorrichtung im Messrohr. Auch kann das Kopplungselement ein akustisches Kopplungselement zur Weiterleitung eines akustischen Signals aufweisen. Ferner bevorzugt weist das zumindest eine Kopplungselement 7 eine akustische Isolierung 74 auf, wobei die akustische Isolierung 74 einen O-Ring und/oder eine umfassen kann. Andere Varianten einer akustischen Isolierung sind denkbar.

Der Wandlerflansch TF dient beispielsweise mit seinem Kopplungselement 7/mechanischen Verbindungselement 73 dem Anschluss an eine Aufnahmevorrichtung im Messrohr.

Gemäß verschiedener Ausführungsvarianten weist der Ultraschallwandler 1 ferner eine Vorspannungseinheit 8 und/oder eine Dämpfungseinheit 9 auf. Bevorzugt weist die Dämpfungseinheit 9 einen O-Ring auf.

Die Vergussmasse der zweiten Schicht 11 der Rauschunterdrückungseinheit NR weist bevorzugt Partikel auf. Die Partikel weisen ferner bevorzugt eine Größe in µm-Bereich auf. Ferner bevorzugt sind die Partikel oder zumindest ein Teil davon Partikel mit einer hohen Dichte, beispielsweise mit einer Dichte größer als 8g/cm³.

Während der Herstellung des Ultraschallwandlers 1, wird das Vergussmaterial beim Aushärten bevorzugt geschleudert, so dass eine maximale Impedanz des Vergusses an der Innenwand der Rauschunterdrückungseinheit NR vorliegt.

Die Schallabstrahlungsfläche 3 kann gemäß verschiedener Ausführungsformen aus verschiedenen Formen oder Materialien bestehen, um das beste Signal zu erzeugen, und ist über das zumindest eine Kopplungselement 7, dem starren Verbindungselement 71, mit dem Wandlerflansch TF verbunden. Zwischen Wandlerflansch TF und dem Wandlerkopf TH (mit der Schallabstrahlungsfläche 3), kann eine Rauschunterdrückungseinheit NR angeordnet sein.

Der erfindungsgemäße Ultraschallwandler 1, welcher in Figur 1 abgebildet ist, weist ein Gehäuse auf, welches bevorzugt aus Ti besteht, und eine Schallabstrahlungsfläche 3, welche ebenfalls bevorzugt aus Ti besteht und eine Dicke zur effizienten Übertragung von Ultraschallsignalen aufweist. Andere Materialien, aus welchem das Gehäuse besteht, sind denkbar, ebenso andere Dicken der Schallabstrahlungsfläche 3. Das magnetostriktive Element 4 zur Umwandlung des elektrischen Anregungssignals in ein Ultraschallsignal und zur Umwandlung des empfangenen Ultraschallsignals in ein elektrisches Signal ist bevorzugt ein zylindrischer Stab, der aus einem Material mit gigantischer magnetostriktiver Wirkung, einem so genannten GMM (giant magnetostrictive material), hergestellt ist. Die chemische Zusammensetzung kann aus Terbium, Dysprosium und Eisen oder TbDyFe bestehen. Der GMM-Stab ruht in einer Spule 5, und auf ein Ende des GMM-Stabs wird durch eine Vorspannungseinheit 8, beispielsweise mittels eines federbelasteten Kolbens, eine Vorspannung ausgeübt, während sein anderes Ende auf die Schallabstrahlungsfläche 3 gedrückt wird. Eine Einrichtung zur Erzeugung einer Vormagnetisierung 6 des magnetostriktiven Elementes 4 ist angeordnet, welche bevorzugt aus einem magnetischen Koppler 62 und mindestens einem Dauermagneten 61 besteht. Bevorzugt wird zumindest ein Dauermagnete 61 verwendet, welcher die Spule 5 umgeben, um ein Vormagnetisierungsfeld für den GMM-Stab (schallumwandelndes magnetostriktives Element 4) zur Erzeugung einer linearen Dehnung zu erzeugen. Wenn ein elektrischer Impuls an die Spule 5 angelegt wird, vergrößert sich die Länge des GMM-Stabs (schallumwandelndes magnetostriktives Element 4) aufgrund des Effektes der Magnetostriktion. Eine solche Längenänderung drückt auf die Mitte der Schallabstrahlungsfläche 3, wodurch sich die Schallabstrahlungsfläche 3 verformt; auf der anderen Seite der Schallabstrahlungsfläche 3 wird dann eine Schallwelle erzeugt.

Magnetostriktive Materialien auf Nickel-Basis sind seit langem bekannt. Die magnetostriktive Wirkung dieser Materialien ist jedoch sehr gering. Neue Entwicklungen bei den Materialien ermöglichen die Herstellung von Zusammensetzungen mit einem viel höheren magnetostriktiven Koeffizienten. Wie in Tabelle 1 gezeigt, ist der elektromechanische Kopplungsfaktor viel höher als der von typischen piezokeramischen Materialien wie PZT.

**Tabelle 1 : Materialparameter von Piezo, magnetostriktiven Materialien auf Nickelbasis und GMM**

| | | **TbDyFe** | **FeGa** | **Ni-based** | **PZT** |
|---|---|---|---|---|---|
| **Magnetostrictive coefficient, ppm** | **λ(Δl/l)** | 1500 - 2000 | 300 - 400 | -40 | 400 - 600 |
| **Magneto-mechanical coupling factor** | **K₃₃** | > 70% | 65% | <20% | 50% |
| **Energy density, kJ/m³** | | 14 - 25 | 0.3 - 0.6 | 0.03 | 0.6-1 |
| **Response time, µS** | | <1 | <1 | | -10 |

Wenn die Schallabstrahlungsfläche 3 in ihre ursprüngliche Position zurückkehrt und sich weiter in die entgegengesetzte Richtung bewegt, dämpft die Dämpfungseinheit 9, beispielsweise ein O-Ring, diese Bewegung, so dass die mechanische Vibration schnell gestoppt werden kann. Auf diese Weise können kurze und deutlich erkennbare Signale erzeugt werden, während die hohe Effizienz der Umwandlung zwischen elektrischer und akustischer Energie erhalten bleibt.

Das Ti-Gehäuse ist über zumindest eine Kopplungseinheit 13, beispielsweise ein Gewinde und einer O-Ring-Dichtung mit einem Schallwandlerflansch TF aus Edelstahl oder einer Rauschunterdrückungseinheit NR aus Edelstahl verbunden.

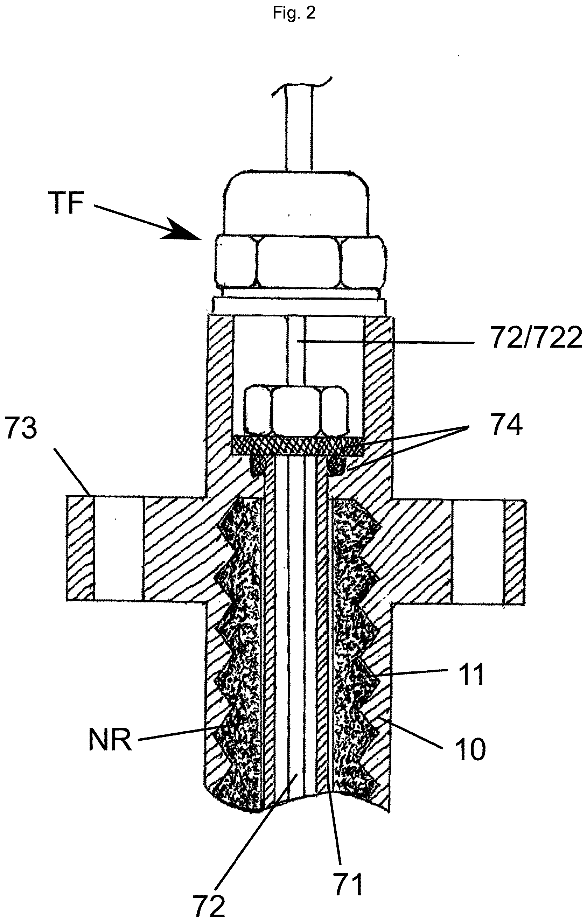

Der Schallwandlerflansch TF, wie er gemäß einer Ausführungsform in Figur 2 dargestellt ist, weist zumindest ein Kopplungselement 7 auf, wobei das Kopplungselement 7 gemäß verschiedener Ausführungsformen ein starres Verbindungselement 71 aufweist, beispielsweise eine Verbindungsstange, welche mit dem Schallwanderkopf TH gekoppelt ist oder an eine Rauschunterdrückungseinheit NR, um eine komplette Wandlerbaugruppe zu bilden, sowie ein mechanisches Verbindungselement 73 (in Figur 2 nicht dargestellt) zur Kopplung des Ultraschallwandlers 1 mit einer Anschlussstelle an einem Messrohr oder zur Kopplung des Ultraschallwandlerkopfes TH mit dem Flansch TF oder mit einer Rauschunterdrückungseinheit NR, und ein elektrisches Verbindungselement 72 zur Kopplung des Ultraschallwandlers 1 / Ultraschallwandlerkopfes TH mit einem externen Messumformer. Ein Messumformer sendet und empfängt elektrische Signale. Bevorzugt ist das eine elektrische Verbindungselement 72 beispielsweise ein Kabel oder ein Koaxialkabel. Bevorzugt weist das zumindest eine Kopplungselement 7 eine akustische Isolierung 74 auf, welches beispielsweise in ein mechanisches Verbindungselement 73 eingebracht ist, wie in Figur 2 dargestellt.

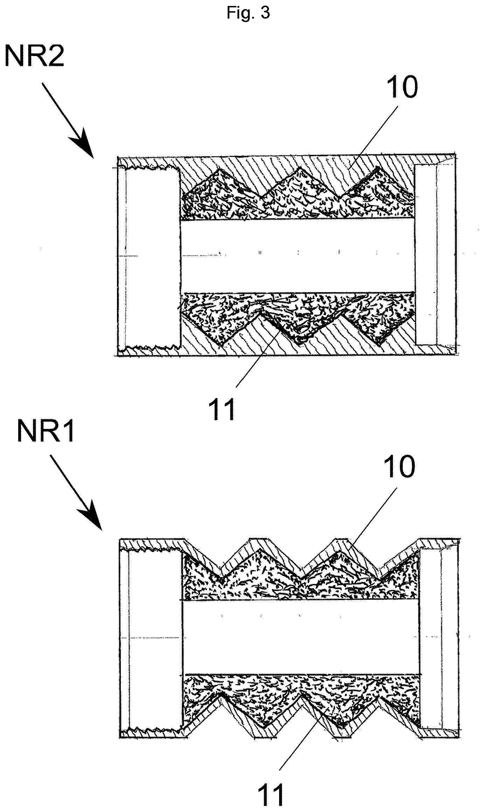

In Figur 3 sind zwei verschiedene Ausführungsvarianten einer Rauschunterdrückungseinheit NR dargestellt (NR1 und NR2). Das Innere (erste Schicht 10) beider Rauschunterdrückungseinheiten NR ist dreieckig mit dünnen und dicken Abschnitten bearbeitet, um eine Impedanzfehlanpassung zu erzeugen. In diese dreieckig gefrästen Aussparungen ist zumindest ein Vergussmaterial mittels einer zweiten Schicht 11 aufgebracht. Diese Anordnung dient der Geräuschdämpfung. Die erste Schicht 10 ist hierbei bevorzugt die Innenwand der Rauschunterdrückungseinheit NR, des Flansches TF und/oder des Wandlerkopfes TH. NR1 zeigt, dass die erste Schicht 10 der Form der Inneren Aussparungen angepasst ist, NR2 zeigt nur eine dreieckig geformte innere Seite der ersten Schicht 10.

Als Vergussmaterial für die zweite Schicht 11 wird bevorzugt eine Epoxidharz-Partikel-Mischung verwendet. Hierfür ist das Epoxidharz bevorzugt mit Partikeln hoher Dichte angereicht, beispielsweise mit Partikeln mit einer Dichte größer als 8g/cm³. Ferner bevorzugt wird das Vergussmaterial beim Aushärten geschleudert, so dass die maximale Impedanz des Vergusses an der Innenwand einer Rauschunterdrückungseinheit NR liegt, um eine bessere Impedanzanpassung zwischen dem Edelstahlgehäuse und dem Vergussmaterial zu erreichen.

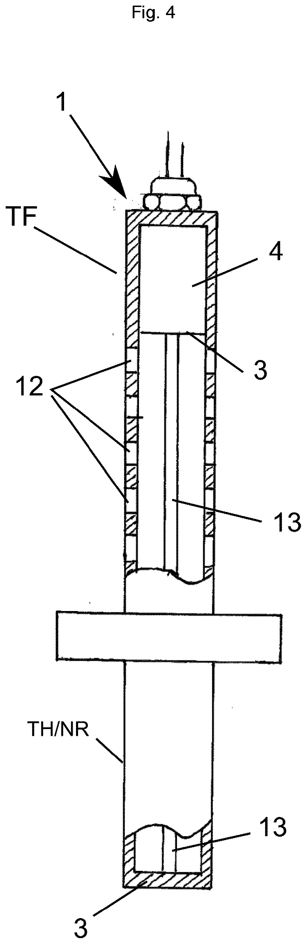

Bei einigen Anwendungen können die Prozesstemperaturen im Messrohr sehr hoch sein, so dass ein normaler Messkopf solchen "heißen Gasen" möglicherweise nicht standhält. Eine Hochtemperaturversion ist eine Ausführungsvariante des erfindungsgemäßen Ultraschallwandlers 1 und ist in Figur 4 dargestellt:

Das magnetostriktive Element 4 ist in der hier vorgestellten Hochtemperatur-Variante im Wandlerflansch TF anordnet, ebenso wie die weiteren signalerzeugenden Bauteile, da dies das "kühle" Ende des Ultraschallwandlers 1 ist. Die signalerzeugenden Bauteile sind gemäß verschiedener Ausführungsvarianten eine erste Schallabstrahlungsfläche 3, das magnetostriktive Element 4 und die Spule 5. Weitere Komponenten, wie die Vorrichtung 6 zur Vormagnetisierung des magnetostriktiven Elemente 4, die Vorspannungseinheit und/oder die Dämpfungseinheit ist/sind bevorzugt in der Hochtemperatur-Variante ebenfalls im Wandlerflansch TF angeordnet. In dieser Hochtemperaturvariante ist eine zweite Schallabstrahlungsfläche 3 im Wandlerkopf TH angeordnet. Das akustische Signal wird von der zweiten Schallabstrahlungsfläche 3 des Wandlerkopfes TH über einen Wellenleiter 13 an die erste Schallabstrahlungsfläche 3 im Wandlerflansch TF übertragen. Die Schallabstrahlungsflächen 3 können gemäß verschiedener Ausführungsformen aus verschiedenen Formen oder Materialien bestehen, um das beste Signal zu erzeugen, und sind über den Wellenleiter akustisch miteinander verbunden. Zwischen dem Wandlerkopf TH und dem Wandlerflansch TF ist bevorzugt eine Rauschunterdrückungseinheit NR angeordnet. Je nach Prozessbedingungen ist es denkbar, dass die Länge der Rauschunterdrückungseinheit NR an eine thermische Isolierung des Messrohres bis zum Flansch des Rohrstutzens, an den der Wandlerflansch TF anschließt, angepasst ist. Zwischen dem Wandlerflansch TF und dem Wandlerkopf TH befindet sich ein Kühlteil 12 des Ultraschallwandlers 1, welches der Kühlung dient. Das Kühlteil 12 kann beispielsweise Entlüftungsöffnungen am Gehäuse des Ultraschallwandlers 1 aufweisen, wodurch das Innere des Ultraschallwandlers bzw. des Wandlerflansches TF belüftet wird, so dass die Temperatur des Wellenleiters 13 niedrig genug ist, bevor sie das schallumwandelnde magnetostriktive Element 4 erreicht. Ein GMM-Modul kann eine Ex-geschützte Version für gefährliche Anwendungen sein, also eine für einen Einsatz in explosionsgeschützter Umgebung geeignete Ausgestaltung.

### Bezugszeichen

- 1: Ultraschallwandler

- 3: Schallabstrahlungsfläche
- 4: magnetostriktives Element
- 5: Spule
- 6: Einrichtung zur Erzeugung einer Vormagnetisierung des magnetostriktiven Elements (4)
61 Dauermagnet
62 magnetischer Koppler
- 7: Kopplungselement
71 starres Verbindungselement
72 elektrisches Verbindungselement
721 Kabelanschluss
722 Kabel
73 mechanisches Verbindungselement
74 akustische Isolierung
- 8: Vorspannungseinheit
- 9: Dämpfungseinheit
- 10: Erste Schicht der Rauschunterdrückungseinheit NR (Gehäusewand)
- 11: Zweite Schicht der Rauschunterdrückungseinheit NR mit Vergussmasse
- 12: Gehäuse des UltraschallwandlersTH mit Kühlung / Kühlteil
- 13: Wellenleiter
- TH: Ultraschallwandlerkopf
- TF: Ultraschallwandlerflansch
- NR: Rauschunterdrückungseinheit
NR1 erste Variante
NR2 zweite Variante

## Patentansprüche

1. Ultraschallwandler (1) zum Aussenden und/oder zum Empfangen von Ultraschallsignalen, wobei der Ultraschallwandler folgende Komponenten aufweist:
ein magnetostriktives Element (4), eine Spule (5), zumindest eine Schallabstrahlungsfläche (3) einen Wandlerkopf (TH), einen Wandlerflansch (TF) und eine Rauschunterdrückungseinheit (NR), wobei die Rauschunterdrückungseinheit (NR) im Wandlerkopf (TH) und/oder im Wandlerflansch (TF) angeordnet ist, wobei die Rauschunterdrückungseinheit (NR) zumindest zwei verschiedene Schichten (10/11) mit verschiedenen Materialien aufweist, wobei die erste Schicht (10) Aussparungen aufweist und wobei die zweite Schicht (11) gebildet ist aus einer Vergussmasse, welche auf die Aussparungen der ersten Schicht (10) aufgebracht ist,
wobei das magnetostriktive Element (4) derart angeordnet ist, dass ein erzeugtes Wechselfeld der Spule (5) eine Längenänderung des magnetostriktiven Elementes (4) erzeugt, und wobei das magnetostriktive Element (4) mit der zumindest einen Schallabstrahlungsfläche (3) derart gekoppelt ist, dass die Längenänderung die zumindest eine Schallabstrahlungsfläche (3) derart verformt, dass an der dem magnetostriktiven Element (4) abgewandten Seite der zumindest einen Schallabstrahlungsfläche (3) ein zu sendendes Ultraschallsignal erzeugt wird,
und wobei die Verformung der Schallabstrahlungsfläche (3), welche durch ein zu empfangenen Ultraschallsignals bewirkt wird, eine Längenänderung des magnetostriktiven Elementes (4) bewirkt und wobei eine Längenänderung des magnetostriktiven Elementes (4) eine Spannung in der Spule (5) erzeugt.

2. Ultraschallwandler (1) gemäß Anspruch 1, ferner aufweisend eine Einrichtung (6) zur Erzeugung einer Vormagnetisierung des magnetostriktiven Element (4).

3. Ultraschallwandler (1) gemäß Anspruch 2, **dadurch gekennzeichnet, dass** die Einrichtung (6) zur Erzeugung einer Vormagnetisierung des magnetostriktiven Elements (4) zumindest einen Dauermagnet (61) und/oder zumindest einen magnetischen Koppler (62) aufweist.

4. Ultraschallwandler (1) gemäß einem der vorhergehenden Ansprüche, **dadurch gekennzeichnet, dass** das magnetostriktive Element (4), die Spule (5), die zumindest eine Schallabstrahlungsfläche (3) und/oder die Einrichtung (6) zur Erzeugung einer Vormagnetisierung des magnetostriktiven Element (4) im Wandlerkopf (TH) und/oder im Wandlerflansch (TF) angeordnet ist/sind.

5. Ultraschallwandler (1) gemäß einem der vorhergehenden Ansprüche,
**dadurch gekennzeichnet, dass**
die erste Schicht (10) die Gehäusewand des Ultraschallwandlers (1), des Wandlerkopfes (TH) und/oder des Wandlerflansches (TF) und/oder der Rauschunterdrückungseinheit (NR) ist.

6. Ultraschallwandler (1) gemäß einem der vorhergehenden Ansprüche,
**dadurch gekennzeichnet, dass**
der Wandlerflansch (TF), der Wandlerkopf (TH) und/oder die Rauschunterdrückungseinheit (NR) jeweils zumindest ein Kopplungselement (7) aufweisen, welches derart ausgestaltet sind, dass mittels des zumindest einen Kopplungselementes (7) der Wandlerflansch (TF) und der Wandlerkopf (TH) miteinander koppelbar sind und/oder der Wandlerkopf (TH) mit der Rauschunterdrückungseinheit (NR) und/oder der Wandlerflansch (TF) mit der Rauschunterdrückungseinheit (NR) miteinander koppelbar sind.

7. Ultraschallwandler (1) gemäß Anspruch 6, **dadurch gekennzeichnet, dass** das zumindest eine Kopplungselement (7) ein starres Verbindungselement (71) und ein elektrisches Verbindungselement (72) zur Ankopplung des Wandlerkopfes (TH) an einen Sender und/oder ein mechanisches Verbindungselement (73) zur Ankopplung an eine Aufnahmevorrichtung in einem Messrohr und/oder ein akustisches Kopplungselement aufweist.

8. Ultraschallwandler (1) gemäß Anspruch 6 oder 7, **dadurch gekennzeichnet, dass**
das zumindest eine Kopplungselement (7) ferner eine akustische Isolierung (74) aufweist.

9. Ultraschallwandler (1) gemäß Anspruch 8, **dadurch gekennzeichnet, dass** die akustische Isolierung (74) einen O-Ring und/oder eine Dichtung umfasst.

10. Ultraschallwandler (1) gemäß einem der vorhergehenden Ansprüche, ferner aufweisend eine Vorspannungseinheit (8) und/oder eine Dämpfungseinheit (9).

11. Ultraschallwandler (1) gemäß Anspruch 10, **dadurch gekennzeichnet, dass** die Dämpfungseinheit (9) einen O-Ring aufweist.

12. Ultraschallwandler (1) gemäß einem der vorhergehenden Ansprüche,
**dadurch gekennzeichnet, dass**
die Vergussmasse der zweiten Schicht (11) Partikel aufweist.

13. Ultraschallwandler (1) gemäß Anspruch 12, **dadurch gekennzeichnet, dass** die Partikel eine Größe in µm-Bereich aufweisen.

14. Ultraschallwandler (1) gemäß einem der Ansprüche 12 - 13, **dadurch**
**gekennzeichnet, dass**
die Partikel eine hohe Dichte aufweisen.

15. Ultraschallwandler (1) gemäß einem der vorhergehenden Ansprüche,
**dadurch gekennzeichnet, dass**
die Vergussmasse der zweiten Schicht (11) beim Aushärten geschleudert ist.

16. Ultraschallwandler (1) gemäß einem der vorhergehenden Ansprüche,
**dadurch gekennzeichnet, dass**
der Ultraschallwandler (1) als Hochtemperaturvariante ausgestaltet ist.

17. Ultraschallwandler (1) gemäß Anspruch 16, **dadurch gekennzeichnet, dass** die Hochtemperaturvariante ein Kühlelement (12) aufweist.

18. Ultraschallwandler (1) gemäß Anspruch 16 oder 17, **dadurch**
**gekennzeichnet, dass**
die Hochtemperaturvariante einen Wellenleiter (13) aufweist, welcher zwischen der zumindest einen Schallabstrahlungsfläche (3) und einer zweiten Schallabstrahlungsfläche (3) angeordnet ist.
